(19) Europäisches Patentamt

European Patent Office

Office européen des brevets

(11) EP 1 240 221 B1

(12) EUROPÄISCHE PATENTSCHRIFT

(45) Veröffentlichungstag und Bekanntmachung des Hinweises auf die Patenterteilung:
**12.01.2005 Patentblatt 2005/02**

(21) Anmeldenummer: 00965977.2

(22) Anmeldetag: **12.09.2000**

(51) Int Cl.$^7$: **C08F 265/06**, C04B 26/06

(86) Internationale Anmeldenummer:
**PCT/EP2000/008893**

(87) Internationale Veröffentlichungsnummer:
**WO 2001/027175 (19.04.2001 Gazette 2001/16)**

(54) **AUSHÄRTBARE GIESSMASSE UND UNTER VERWENDUNG SOLCHER GIESSMASSEN HERGESTELLTE KUNSTSTOFFORMKÖRPER**

HARDENABLE CASTING MATERIAL AND A PLASTIC SHAPED BODY PRODUCED USING SAID CASTING MATERIALS

MATIERE DE COULAGE DURCISSABLE ET CORPS MOULES EN MATIERE PLASTIQUE OBTENUS PAR UTILISATION DE TELLES MATIERES DE COULEE

(84) Benannte Vertragsstaaten:
**AT BE CH CY DE DK ES FI FR GB GR IE IT LI LU MC NL PT SE**

(30) Priorität: **14.10.1999 DE 19949461**

(43) Veröffentlichungstag der Anmeldung:
**18.09.2002 Patentblatt 2002/38**

(73) Patentinhaber:
• **BLANCO GmbH + Co KG**
  **75038 Oberderdingen (DE)**
• **SCHOCK & CO. GMBH**
  **D-73614 Schorndorf (DE)**

(72) Erfinder:
• **HAJEK, Andreas**
  **74336 Brackenheim (DE)**

• **HARKE, Stefan**
  **74889 Sinsheim-Rohrbach (DE)**
• **GEIER, Josef**
  **94269 Rinchnach (DE)**
• **HOCK, Klaus**
  **94209 Regen (DE)**

(74) Vertreter:
**Wössner, Gottfried, Dr. Dipl.-Chem. et al**
**HOEGER, STELLRECHT & PARTNER**
**Patentanwälte**
**Uhlandstrasse 14c**
**70182 Stuttgart (DE)**

(56) Entgegenhaltungen:
US-A- 4 085 246          US-A- 4 396 476
US-A- 5 719 220          US-A- 5 756 211

**Beschreibung**

Die Erfindung betrifft eine aushärtbare Gießmasse zur Herstellung von Kunststofformkörpern mit einer flüssigen, monomeren Acrylatkomponente, einem Anteil eines partikelförmigen anorganischen Materials im Bereich von 45 bis 85 Gew.%, vorzugsweise 55 bis 75 Gew.%, bezogen auf die gesamte Gießmasse. Die Erfindung betrifft des weiteren Kunststofformkörper, die unter Verwendung der vorgenannten Gießmassen hergestellt sind. Darüber hinaus betrifft die Erfindung ein Verfahren zur Herstellung von Kunststofformkörpern unter Verwendung der vorgenannten aushärtbaren Gießmassen.

Die vorgenannten aushärtbaren Gießmassen werden in großem Umfang zur Herstellung von Kunststofformkörpern, insbesondere in Form von Küchenspülen, Waschbecken, Badewannen, Duschtassen etc. verwendet und zeichnen sich durch eine Reihe vorzüglicher Gebrauchseigenschaften aus, insbesondere eine relativ leichte Reinigungsmöglichkeit, gute Abrasionsbeständigkeit etc.

Bei Kunststofformkörpern, die insbesondere im Küchenbereich ihren Einsatz finden, ist die sogenannte Heißtopfbeständigkeit von großer Bedeutung.

Die bisher bekannten Kunststofformkörper, die aus herkömmlichen aushärtbaren Gießmassen hergestellt wurden, wiesen bereits eine Heißtopfbeständigkeit auf, die Topftemperaturen bis zu 260 °C, insbesondere bei nur kurzzeitiger Belastung, aushalten.

Da bei der Verwendung der Kunststofformkörper im Küchenbereich jedoch immer wieder Beanspruchungssituationen auftreten, bei denen die Temperaturen noch höher sind als die zuvor angesprochenen, besteht ein Bedürfnis dahingehend, aushärtbare Gießmassen sowie daraus hergestefite Kunststofformkörper vorzuschlagen, bei denen die Heißtopfbeständigkeit verbessert ist.

Aus dem US-Patent 5,756,211 sind Formkörper bekannt, die auf mindestens elner Oberfläche ein glitzerndes Aussehen aufweisen. Die Gießmasse zur Herstellung dieser Formkörper beinhaltet neben dem eine Polymermatrix bildenden Material 30 bis 80 Gew. % eines feinen partikelförmigen anorganischen Füllstoffes und 0,1 bis 5 Gew. % an Kunststoffpartikeln, welche den Glitzereffekt verursachen. Die Heißtopfbeständigkeit dieser Formkörper wird nicht angesprochen.

Das US-Patent 5,719,220 empfiehlt eine Gießmassenrezeptur, in der neben aaylatbasierenden Monomeren 20 bis 80 Vol.-% eines fein verteilten partikelförmigen anorganischen Fülistoffs und 0,05 bis 0,5 Gew. % eines Polysiloxans vorliegen. Letztere Komponente soll die Kratzfestigkelt sowie die Beständigkeit von aus der Gleßmasse hergestellten Küchenspülen gegenüber Helß-Kalt-Zyklen verbessern. Eine verbesserte Heißtopfheständigkeit wird hier ebenfalls nicht angesprochen.

Im Zusammenhang mit der Herstellung von Dentalprothesen empfiehlt das US-Patent 4,396,476 die Verwendung aushärtbarer Zusammensetzungen, welche sich aus bis zu 50 Gew. % eines nicht vernetzten Polymers, 20 bis 66 Gew. % elnes polymerislerbaren Monomers, in dem das nicht vernetzte Polyrner löslich ist, und 10 bis 70 Gew. % eines vernetzten Polymers in Form von Partikeln mit mittlerem Durchmesser im Bereich von 0,001 µm bis 500 µm zusammensetzen und ferner ein Vernetzungsmittel für des Monomer beinhalten, welches einen Anteil von 0,25 bis 27 Gew. % aufweisen kann. Damit sollen Dentalprothesen erhalten werden, welche ausreichend gute physikalische und physikechemische Eigenschaften aufweisen und gegen Materialabtragung resistent sind.

Diese Aufgabe wird erfindungsgemäß dadurch gelöst, daß bei der eingangs beschriebenen aushärtbaren Gießmasse ferner ein Anteil eines partikelförmigen, hydrophoben und/oder oleophoben Kunststoffmaterials von 0,5 Gew.% oder mehr enthalten ist, welches ausgewählt ist aus Polytetrafluorethylen, Fluorelastomeren auf der Basis von vinylidenfluorid-Hexafluorpropylen-Copolymerisat, Polypropylen und Polypropylen-Copolymeren.

Überraschenderweise hat sich gezeigt; daß durch Zusatz von bereits relativ geringfügigen Antellen (beispielsweise 0,5 Gew.%, bezogen auf die Gleßmasse, oder mehr) eine deutliche Verbesserung der Heißtopfbeständigkeit erreicht werden kann, beispielsweise eine Heißtopfbeständigkeit bis 300 °C, so daß auch Kochtöpfe, die beispielsweise zum Fritieren verwendet wurden und heiße Öle enthalten, problemlos auf der Küchenspüle oder der Küchenarbeltsplatte, d.h. dem erfindungsgemäßen Kunststofformkörper ganz allgemein, abgestellt werden können.

Die verbesserte Heißtopfbeständigkeit (der Begriff Heißtopfbeständigkeit wird im folgenden noch näher definiert werden) ergibt sich bis 300 °C, wobei bis zu dieser Temperatur keinerlei Veränderungen der Oberfläche resultieren, und sogar bis zu 340 °C keine Veränderung der Oberflächenstruktur stattfindet und lediglich eine Gelbfärbung beobachtet wird, die jedoch häufig bereits nach wenigen Tagen wieder verschwindet.

Des weiteren konnte überraschenderweise festgestellt werden, daß durch die Zugabe des partikelförmigen, hydrophoben und/oder oleophoben Kunststoffmaterials auch eine deutliche Verbesserung der Kratzfesitgkeit erreicht wird. So findet man eine Verminderung der Kratztiefen von bis zu ca. 50%.

Darüber hinaus konnte festgestellt werden, daß die bereits bei den unter Verwendung herkömmlicher aushärtbarer Gießmassen hergestellten Kunststofformkörpern ausgezeichnete Reinigungsfreundlichkeit weiter verbessert wird, da die Verschmutzungstendenz der Oberfläche durch den geringen Anteil eines partikelförmigen, hydrophoben und/oder oleophoben Kunststoffmaterials weiter verbessert wird.

Ebenso überraschend und eventuell mit vorhergehend beschriebenem Effekt im Zusammenhang stehend ist, daß die Oberfläche der Kunststofformkörper etwas glatter ausfällt als die von unter Verwendung von herkömmlichen aushärtbaren Gießmassen hergestellten Kunststofformkörpern.

Eine abrasive Behandlung, wie dies im Küchen- und Badbereich häufig bei der Verwendung von Scheuermitteln vorkommt, führt zu einer glänzenden und keinesfalls, wie an sich zu erwarten wäre, zu einer aufgerauhten, weißlich schimmernden Oberfläche. Damit bleiben die Farbeffekte, die aufgrund von beispielsweise gefärbten Füllstoffmaterialien in dem Kunststofformkörper erzielt werden sollen, erhalten und leiden bei solchen abrasiven Behandlungen nicht.

Der Anteil des hydrophoben und/oder oleophoben Materials wird üblicherweise auf maximal 15 Gew.% begrenzt, da oberhalb dieser Grenze keine weitere Verbesserung der vorher angesprochenen Effekte erzielbar ist.

Der bevorzugte Bereich, in dem das hydrophobe und/oder oleophobe partikelförmige Material eingesetzt wird, ist der Bereich von 1 bis 10 Gew.%.

Die besten Ergebnisse wurden im Bereich von 2 bis 7 Gew.% erzielt, insbesondere auch unter Kostengesichtspunkten betrachtet, wobei sich am meisten bevorzugt der Bereich von 3 bis 6 Gew.% erwiesen hat.

Die Partikelgröße des partikeltörmigen hydrophoben und/oder oleophoben Kunststoffmaterials ist an sich nicht kritisch, jedoch wird ein oberes Limit der Partikel- bzw. Partikelagglomeratgröße von 500 μm empfohlen, damit der Zusatz dieses Materials auf der Sichtseite des herzustellenden Kunststofformkörpers die Optik nicht stört. Bei mittleren Partikelgrößen ≤ 50 μm findet man auch bei optisch sehr anspruchsvollen Materialien keineriel Beeinträchtigung.

Wie zuvor ausgeführt wurde, betrifft die Erfindung auch Kunststofformkörper, die unter Verwendung der zuvor diskutierten aushärtbaren Gießmassen hergestellt worden sind, wobei bevorzugt mindestens eine oberflächliche Sichtseitenschicht des Formkörpers von der erfindungsgemäßen Gießmasse gebildet ist.

Wird nur die Sichtseitenschicht von der erfindungsgemäßen aushärtbaren Gießmasse gebildet und der Rest des Formkörpers von einer weiteren Gießmasse, dann empfiehlt sich, daß die Sichtseitenschicht eine Dicke von 1 mm oder mehr aufweist. Diese Schichtdicke von 1 mm ist bereits ausreichend, um dem Kunststofformkörper alle vorbeschriebenen Vorteile zu verschaffen.

Bevorzugt wird das hydrophobe und/oder oleophobe Material in den aus der Gießmasse gebildeten Bereichen im wesentlichen homogen verteilt sein.

Zu beobachten Ist erstaunlicherweise, daß die Verbesserung, die der Verschmutzungsneigung erzielt wird, davon im wesentlichen unbeeinflußt bleibt ob der Füllstoff zur Sichtseite des Formtells absinkt und sich dort anreichert oder nicht. Somit bleibt dem Fachmann die freie Wahl unter den Füllstoffsystemen und den damit zu erzielenden Effekten.

Bereits angesprochen wurde, daß sich die aushärtbare Gießmasse insbesondere bei der Herstellung von Küchenspülen oder Küchenarbeitsplatten als Formkörper empfiehlt, da gerade hier die Heißtopffestigkeit von besonderer Bedeutung ist. Ähnliches gilt selbstverständlich für Laborarbeitsplatten oder aber Ausgußbekken oder dergleichen, die regelmäßig hohen Temperaturen, insbesondere durch Aufsetzen heißer Gegenstände, ausgesetzt sind.

Schließlich betrifft die Erfindung noch ein Verfahren zur Herstellung eines Kunststofformkörpers, wobei hier die erfindungsgemäße aushärtbare Gießmasse zur Anwendung kommt. Hierbei wird bei der Bildung der aushärtbaren Gießmasse zunächst in einem ersten Schritt in einem die flüssige, monomere Acrylatkomponente enthaltenden Sirup der Anteil des hydrophoben und/oder oleophoben Materials vordispergiert und dann der anorganische Füllstoff der Mischung aus Sirup und hydrophobem und/oder oleophobem Material zugemischt, wobei dann die so hergestellte Gießmasse in eine Form gegeben und schließlich dort gehärtet wird.

Korrespondierend zu den Kunststofformkörpern, bei denen nur die Sichtseitenschicht des Kunststofformkörpers unter Verwendung einer erfindungsgemäßen Gießmasse hergestellt wird, weist ein bevorzugtes Verfahren die Besonderheit auf, daß zunächst die Sichtseitenschicht des Kunststofformkörpers unter Verwendung einer erfindungsgemäßen Gießmasse hergestellt und dann unter Verwendung einer weiteren Gießmasse der Rest des Formkörpers gebildet wird.

Diese und weitere Vorteile der vorliegenden Erfindung werden im folgenden anhand der Beispiele noch näher erläutert.

Zunächst sei auf die verschiedenen Testmethoden für die Oberflächenqualität der erfindungsgemäß erzielten Kunststofformkörper eingegangen:

**1.** Heißtopfbeständigkeitstest

Ein metallischer Prüfkörper der Zusammensetzung AlMgSi 0,5F25 (analog DIN 12722 10/97) wird in einem Muffelofen auf die entsprechende Prüftemperatur erhitzt. Nach Entnahme des Prüfkörpers aus dem Muffeloffen erfolgt zur Feststellung der Prüftemperatur eine Temperaturmessung. Sollte die gemessene Temperatur heißer als die Prüftemperatur sein, so wartet man die Temperatureinstellung ab. Der Prüfkörper wird dann auf die zu prüfende Probe gestellt. Man stoppt die Zeit und zeichnet die Umrisse des Prüfkörpers mit Bleistift ein. Nach 20 Minuten Auflagezeit wird der Prüfkörper entfernt und die Probe auf Risse, Verformungen sowie Farbveränderungen hin untersucht. Man wartet weitere 20 Minuten ab, um die Probestelle erneut im erkalteten Zustand zu beurteilen. Das dann sichtbare Testergebnis wird festgehalten.

2. Kratzfestigkeit

Die Kratzfestigkeit wird nach dem mechanischen Mikro-Struktur-Analyse Verfahren der Fa. INNOWEP (Deutschland) mit dem Meßgerät MISTAN bestimmt. Hierzu wird die Oberflächentopographie der Probe über eine Tastspitze erfaßt, wobei ein Meßzyklus drei Schritte der Topographiebestimmung umfaßt:

1. Schritt:

Eine nahezu lastfreie Tastspitze tastet entlang einer festgelegten Bahn die Oberfläche ab. Dabei wird kontinuierlich die vertikale Auslenkung und somit das Höhenprofil ermittelt.

2. Schritt:

Die gleiche Bahn wird mit derselben Tastspitze und einer zusätzlich definierten Last abgetastet. Die Oberfläche wird dabei verformt. Das so ermittelte Höhenprofil stellt die lokale Gesamtverformung dar.

3. Schritt:

Im letzten Schritt erfolgt die Abtastung wieder nahezu ohne Last. Der elastische Teil der Gesamtverformung ist nun zurückgestellt, das Höhenprofil wird nur noch von der verbleibenden permanenten Verformung bestimmt. Als Maß für die Kratzfestigkeit dient die permanente Verformung.

3. Reinigungstest

Im Zusammenhang mit der Bewertung der Reinigungsfreundlichkeit, oder aber auch, anders ausgedrückt, der Verschmutzungsneigung der gebildeten Kunststofformkörper, wird ein synthetischer Modellschmutz verwendet und das Abreinigen dieses Schmutzes unter definierten Bedingungen durchgeführt. Die elastische Verformung ergibt sich als Differenz zwischen der Gesamtverformung und der permanenten Verformung.
Als Modellschmutz wird folgende Zusammensetzung verwendet:

| 7 Gew.% | Spezialschwarz 4, RuB (Degussa AG) |
| 40 Gew.% | Prozeßöl 310 (ESSO AG) |
| 17 Gew.% | Arlypon DV, ein $C_8$-Fettsäureglycerinester (Firma Grünau Illertissen GmbH) |
| 36 Gew.% | Benzin, Kp. 65/100 °C (Fluka: 12270) |

Abrasive Vorbelastung

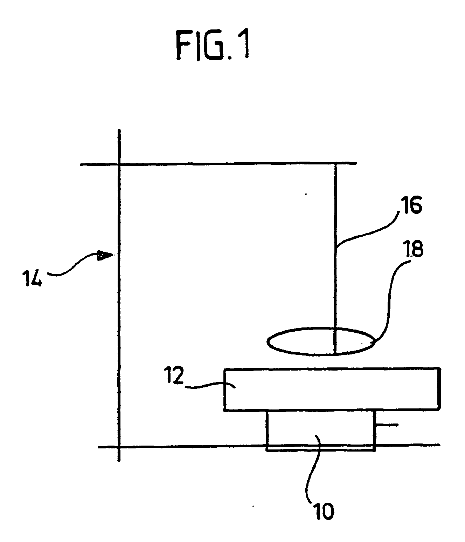

6 g Aluminiumoxid in einem Korngrößenbereich von 63 µm bis 200 µm (Aluminiumoxid 90 aktiv, neutral, Fa. Merck, Deutschland) werden auf der Probe verteilt. Mit einem angefeuchteten, runden Schwamm wird diese Menge in Form einer gleichförmigen Rotationsbewegung bei 60 U/min. und einem Auflagegewicht von 4 kg auf die Probenoberfläche appliziert. Nach dem Erreichen von 100 Umdrehung wird abgebrochen.
Für das Abreinigen des Modellschmutzes von der zu prüfenden Oberfläche wird eine Reinigungsapparatur verwendet, wie sie schematisch in der Figur 1 dargestellt ist. Der Versuchsaufbau wird im folgenden kurz beschrieben:
Auf einer Hebebühne 10 wird eine Waage 12 plaziert, auf der der Probenkörper (nicht gezeigt) fixiert werden kann.
Neben der Anordnung von Hebebühne 10 und Waage 12 wird ein Rührer 14 mit einstellbarer Umdrehungszahl angeordnet, so daß dessen Motorwelle 16 senkrecht über der Mitte der Waage 12 plaziert ist. Im Versuch wird an der Motorwelle 16 an ihrem unteren, freien Ende ein runder Schwammkörper 18 befestigt, der drehfest mit der Welle 16 verbunden ist.
Bei der Durchführung des Abreinigungstests wird mit der Hebebühne die Waage so lange angehoben, bis diese ein Auflagegewicht des Schwammkörpers von 4 kg zeigt.
Die Versuchsdurchführung im einzelnen:

Es werden 0,3 g des aus den oben beschriebenen Bestandteilen bestehenden Modellschmutzes auf ein Uhrglas gegeben und mit Hilfe eines schmutzgesättigten Flachpinsels gleichmäßig, d. h. waagerecht und senkrecht überlappend, auf der Testfläche (ca. 10 cm$^2$) verteilt. Man läßt ihn 60 min. einwirken. Anschließen wird mit Warmwasser so lange gespült, bis sich kein Ruß mehr ablöst. Danach wird mit entmineralisiertem Wasser nachgespült und luftgetrocknet. Die verbleibende Verschmutzung wird als Farbdifferenz gemessen. Als Bezug dient immer die unbehandelte Probe. Es ist zu beachten, daß der Bezugswert bei jeder einzelnen Probe zu messen ist, da geringfügige Farbunterschiede bei den Proben untereinander möglich sind.

Abreinigung

Die angeschmutzten Proben werden mit 10 Umdrehungen (bei einer Umlaufgeschwindigkeit von 60 U/min.) und einem Auflagegewicht von 4 kg gereinigt. Hierzu werden 6 g des Reinigers Blanco Clean (Mineralischer Putzkörpergehalt: 21,5 %, Fa. BLANCO, Deutschland) eingesetzt. Für die Reinigungsdurchführung wird ein unbenutzter, feinporiger und angefeuchteter Schwamm mit einem Durchmesser von ca. 8 cm verwendet. Nach erfolgter Reinigung wird die Testfläche gut abgespült, mit entmineralisiertem Wasser nachgespült und luftgetrocknet. Die Restverschmutzung wird als Farbdifferenz zur unbehandelten Probe gemessen und als ΔE Wert angegeben:

$$\Delta E = \sqrt{(L_{Bezug} - L_{Probe})^2 + a_{Bezug} - a_{Probe})^2 + (b_{Bezug} - b_{Probe})^2}$$

Die Restverschmutzung [% RV] berechnet sich aus den ΔE-Werten vor und nach der Abreinigung der betrachteten Oberflächen wie folgt:

$$RV = \frac{\Delta E \text{ gereinigt}}{\Delta E \text{ verschmutz}} \cdot 100$$

Die Erfindung wird nun anhand von Beispielen und Vergleichsbeispielen näher erläutert:

Beispiel 1

2,0 kg PMMA einer normalen Type im Molekulargewichtsbereich Mw von 50.000 bis 250.000 wird in 8,0 kg MMA gelöst und mit einem Entformungshilfsmittel (35 g Stearinsäure der Fa. Merck, Deutschland) und Vernetzer (200 g Trimethylolpropantrimethacrylat der Fa. Agomer, Deutschland) versetzt. Man erhält einen verhältnismäßig dickflüssigen Sirup.

In diesem Sirup werden nun 1,3 kg eines partikulären PTFE-Pulvers (Zonyl MP 1400, Fa. Du Pont, Deutschland) von unregelmäßiger Kontur und einer durchschnittlichen Korngröße von 12 μm dispergiert. Es werden dann 28 kg eines Quarzsandes (silanisiert) hinzugegeben, dessen einzelnes Korn im Kern im wesentlichen aus Quarz und an der Oberfläche im wesentlichen aus alpha-Cristobalit besteht (EP 0 716 097 B1, ACQ der Fa. Quarzwerke, Deutschland) und in einem Korngrößenbereich von 100 μm bis 500 μm vorliegt. Des weiteren wird eine Weißpigment-Dispersion, bestehend aus 1,4 kg des oben beschriebenen Sirups, 1,3 kg eines weiteren Vernetzers (Bisphenol-Aethoxylat (2)dimethacrylat, Fa. Akzo Nobel Chemicals, Deutschland) und 2,3 kg eines Weißpigmentes (Titandioxid, Fa. Kemira, Finnland), hinzugegeben. Der anorganische Füllstoffanteil der Gießmasse beträgt 62,9 Gew.%. Anschließend erfolgt die Zugabe von Peroxiden (60 g Peroxan BCC, 120 g Peroxan LP und 10 g Peroxan TB jeweils von der Fa. Pergan, Deutschland) und das thermische Aushärten der Gießmasse in geeigneten Formen (Küchenspüle).

Probenstücke der Spülen werden ohne und nach erfolgter abrasiver Vorbelastung (siehe oben) mit einem synthetischen Modellschmutz verunreinigt und unter definierten Bedingungen gereinigt (siehe oben) und die an der Oberfläche verbleibende Restverschmutzung über eine photoelektrische Helligkeitsmessung bestimmt.

| | |
|---|---|
| Restverschmutzung ohne abrasive Vorbelastung | 3,0 % |
| Restverschmutzung mit abrasiver Vorbelastung | 1,2 % |

Der Heißtopftest bei einer Temperatur des Prüfkörpers von 340°C ergab einen Wert von ΔE = 3,2. Dieser Vergilbungseffekt verringert sich in 24 Stunden auf ΔE = 2,8. Eine Blasenbildung konnte nicht beobachtet werden.

Vergleichsbeispiel 1

Eine Vergleichsprobe, die mit einer Gießmasse hergestellt wurde, die sich von der in Beispiel 1 nur dadurch unterschied, daß der Anteil des hydrophoben und oleophoben PTFE-Materials weggelassen wurde, ergab im selben Test ohne bzw. mit abrasiver Vorbehandlung eine Restverschmutzung von 12,8 bzw. 7,8 %.

Beim Heißtopftest wurde bei einer Temperatur des Prüfkörpers von 340°C ein ΔE-Wert von 2,9 gefunden, begleitet allerdings von einer Blasenbildung. Nach einer weiteren Wartezeit von 24 Stunden verringerte sich die Vergilbung auf den Wert ΔE = 2,6, die Blasenbildung bestand jedoch in unvermindertem Umfang fort.

Zum Vergleich mit dem in dem folgenden Beispiel beschriebenen Material wurde noch ein Kratzfestigkeitstest durchgeführt, der eine elastische Verformung von 4,2 μm ergab. Die permante Verformung betrug 6,4 μm.

Beispiel 2

In den Sirup aus Beispiel 1 werden 1,3 kg eines partikulären PTFE-Pulvers (Hostaflon TF 9207 PTFE, Fa. Dyneon, Deutschland) von regelmäßiger sphärischer Kontur und einer durchschnittlichen Korngröße von 4 μm dispergiert.

Es werden dann wie in Beispiel 1 28 kg eines Quarzsandes (silanisiert) hinzugegeben, dessen einzelnes Korn im Kern im wesentlichen aus Quarz und an der Oberfläche im wesentlichen aus alpha-Cristobalit besteht (EP 0 716 097 B1, ACQ der Fa. Quarzwerke, Deutschland) und in einem Korngrößenbereich von 100 μm bis 500 μm vorliegt. Des weiteren wird die Weißpigment-Dispersion in gleicher Zusammensetzung und Menge wie in Beispiel 1 hinzugegeben.

Der anorganische Füllstoffanteil der Gießmasse beträgt 62,9 Gew.%. Anschließend erfolgt die Zugabe von Peroxiden und das thermische Aushärten der Gießmasse in geeigneten Formen (Küchenspüle) wie in Beispiel 1 angegeben.

Probenstücke der Spülen werden ohne und nach erfolgter abrasiver Vorbelastung mit einem synthetischen Modellschmutz verunreinigt und unter definierten Bedingungen gereinigt und die an der Oberfläche verbleibende Restverschmutzung über eine photoelektrische Helligkeitsmessung bestimmt.

| | |
|---|---|
| Restverschmutzung ohne abrasive Vorbelastung | 5,6 % |
| Restverschmutzung mit abrasiver Vorbelastung | 2,5 %. |

Die hier noch untersuchte Kratzfestigkeit ergab eine elastische Verformung von 3,0 μm und eine permante Verformung von 3,3 μm, d.h. eine fast um den Faktor 2 oder 50 % verringerte permanente Beschädigung durch Kratzspuren an der getesteten Oberfläche.

Beispiel 3

In den Sirup aus Beispiel 1 werden 1,3 kg eines partikulären PTFE-Pulvers (Zonyl MP 1400, Fa. Du Pont, Deutschland) von unregelmäßiger Kontur mit einer durchschnittlichen Korngröße von 12 μm und 1,3 kg eines partikulären PTFE-Pulvers (Hostaflon TF 9207 PTFE, Fa. Dyneon, Deutschland) von regelmäßiger sphärischer Kontur und mit durchschnittlichen Korngröße von 4 μm dispergiert. Es werden dann wie in Beispiel 1 28 kg eines Quarzsandes (silanisiert) hinzugegeben dessen einzelnes Korn im Kern im wesentlichen aus Quarz und an der Oberfläche im wesentlichen aus alpha-Cristobalit besteht (EP 0 716 097 B1, ACQ der Fa. Quarzwerke, Deutschland) und in einem Korngrößenbereich von 100 μm bis 500 μm vorliegt. Des weiteren wird die Weißpigment-Dispersion in gleicher Zusammensetzung und Menge wie in Beispiel 1 hinzugegeben.

Der anorganische Füllstoffanteil der Gießmasse beträgt 61,1 Gew.%. Anschließend erfolgt die Zugabe von Peroxiden und das thermische Aushärten der Gießmasse in geeigneten Formen (Küchenspüle) wie in Beispiel 1 angegeben.

Probenstücke der Spülen werden ohne und nach erfolgter abrasiver Vorbelastung mit einem synthetischen Modellschmutz verunreinigt und unter definierten Bedingungen gereinigt und die an der Oberfläche verbleibende Restverschmutzung über eine photoelektrische Helligkeitsmessung bestimmt.

| | |
|---|---|
| Restverschmutzung ohne abrasive Vorbelastung | 8,1 % |
| Restverschmutzung mit abrasiver Vorbelastung | 4,5 %. |

Beispiel 4

In den Sirup aus Beispiel 1 werden nun 1,1 kg eines partikulären PTFE-Pulvers (Zonyl MP 1400, Fa. Du Pont, Deutschland) von unregelmäßiger Kontur und einer durchschnittlichen Korngröße von 12 μm dispergiert.

Es werden dann 27 kg eines kantengerundeten Sandes im Korngrößenbereich von 200 bis 2000 μm (eine

Mischung aus den Typen 1/8, 2/9, 4/8 und 10/8 SIG silanisiert der Fa. Dorfner in Amberg, Deutschland) zugegeben, was einen anorganischen Füllstoffanteil von 70,4 Gew.% ausmacht. Nach dem Zusatz der Peroxide (40 g Peroxan BCC und 80 g Peroxan LP jeweils von der Fa. Pergan, Deutschland) erfolgt das thermische Aushärten der Gießmasse in geeigneten Formen (Küchenspüle) analog Beispiel 1.

Probenstücke der Spülen werden ohne und nach erfolgter abrasiver Vorbelastung mit einem synthetischen Modellschmutz verunreinigt und unter definierten Bedingungen gereinigt und die an der Oberfläche verbleibende Restverschmutzung über eine photoelektrische Helligkeitsmessung bestimmt.

| | |
|---|---|
| Restverschmutzung ohne abrasive Vorbelastung | 13,5 % |
| Restverschmutzung mit abrasiver Vorbelastung | 4,8 %. |

Bei diesem Beispiel findet man zwar bei der neuwertigen Spüle einen vergleichbaren Grad der Restverschmutzung wie bei der Vergleichsprobe, der wichtigere Wert, der das Verhalten im Dauergebrauch zeigt, nämlich der Grad der Restverschmutzung bei einer mit einer abrasiven Vorbehandlung untersuchten Oberfläche liegt wie bei den anderen Beispielen auch deutlich unter dem Grad der Vergleichsprobe des folgenden Vergleichsbeipiels 2.

Vergleichsbeispiel 2

Eine Vergleichsprobe, die mit einer Gießmasse gemäß Beispiel 4, jedoch ohne den Anteil des hydrophoben und oleophoben PTFE-Materials hergestellt wurde, ergab im selben Test ohne und mit abrasiver Vorbehandlung eine Restverschmutzung von 12,3 bzw. 8,8 %.

Beispiel 5

In den Sirup aus Beispiel 1 werden 0,9 kg eines partikulären PTFE-Pulvers (Zonyl MP 1400, Fa. Du Pont, Deutschland) von unregelmäßiger Kontur und einer durchschnittlichen Korngröße von 12 μm zusammen mit 0,45 kg eines partikulären PP-Pulvers (hergestellt aus Eltex HV 200 PF, Fa. Solvay, Deutschland, mittels eines kryogenen Feinmahlprozesses (Cryoclass® der Fa. Messer-Griesheim)) von unregelmäßiger Kontur und einer durchschnittlichen Größe von <40 μm dispergiert. Es werden dann wie in Beispiel 1 28 kg eines Quarzsandes (silanisiert) hinzugegeben, der in einem Korngrößenbereich von 10 μm bis 500 μm vorliegt. Des weiteren wird die Weißpigment-Dispersion hinzugegeben. Der anorganische Füllstoffanteil der Gießmasse beträgt 62,9 Gew.%. Anschließend erfolgt die Zugabe von Peroxiden und das thermische Aushärten der Gießmasse in geeigneten Formen (Küchenspüle) wie in Beispiel 1 angegeben.

Probenstücke der Spülen werden ohne und nach erfolgter abrasiver Vorbelastung mit einem synthetischen Modellschmutz verunreinigt und unter definierten Bedingungen gereinigt und die an der Oberfläche verbleibende Restverschmutzung über eine photoelektrische Helligkeitsmessung bestimmt.

| | |
|---|---|
| Restverschmutzung ohne abrasive Vorbelastung | 4,8 % |
| Restverschmutzung mit abrasiver Vorbelastung | 4,9 % |

Beispiel 6

In den Sirup aus Beispiel 1 werden 1,3 kg eines partikulären PP-Pulvers (hergestellt aus Eltex HV 200 PF, Fa. Solvay, Deutschland, mittels eines kryogenen Feinmahlprozesses (Cryoclass® der Fa. Messer-Griesheim)) von unregelmäßiger Kontur und einer Korngröße von <315 μm dispergiert. Es werden wie in Beispiel 1 28 kg eines Quarzsandes (silanisiert) hinzugegeben. Des weiteren wird eine Weißpigment-Dispersion wie in Beispiel 1 beschrieben hinzugegeben. Der anorganische Füllstoffanteil der Gießmasse beträgt 62,9 Gew.%. Anschließend erfolgt die Zugabe von Peroxiden und das thermische Aushärten der Gießmasse in geeigneten Formen (Küchenspüle) wie in Beispiel 1 angegeben.

Probenstücke der Spülen werden ohne und nach erfolgter abrasiver Vorbelastung mit einem synthetischen Modellschmutz verunreinigt und unter definierten Bedingungen gereinigt und die an der Oberfläche verbleibende Restverschmutzung über eine photoelektrische Helligkeitsmessung bestimmt.

| | |
|---|---|
| Restverschmutzung ohne abrasive Vorbelastung | 4,7 % |
| Restverschmutzung mit abrasiver Vorbelastung | 5,6 % |

Vergleichsbeispiel 3

Platten aus reinem PTFE (Hostaflon, Fa. Dyneon, Deutschland) werden ohne und nach erfolgter abrasiver Vorbelastung mit einem synthetischen Modellschmutz verunreingt und unter definierten Bedingungen gereinigt und die an der Oberfläche verbleibende Restverschmutzung über eine photoelektrische Helligkeitsmessung bestimmt.

| | |
|---|---|
| Restverschmutzung ohne abrasive Vorbelastung | 42 % |
| Restverschmutzung mit abrasiver Vorbelastung | 32 % |

Tabelle 1

| | | Beispiel 1 | Vergleichsbeispiel 1 | Beispiel 2 | Beispiel 3 | Beispiel 4 | Vergleichsbeispiel 2 |
|---|---|---|---|---|---|---|---|
| Hydrophobes und/oder oleophobes Material | | PTFE | - | PTFE | PTFE | PTFE | - |
| | Anteil | 2,9 Gew.% | - | 2,9 Gew.% | 5,7 Gew.% | 2,9 Gew.% | - |
| | Korngröße | 12 µm | | 4 µm | 12 µm/ 4 µm | 12 µm | |
| Füllstoff | | ACQ | ACQ | ACQ | ACQ | SIG | SIG |
| | Anteil | 62,9 Gew.% | 64,8 Gew.% | 62,9 Gew.% | 61,1 Gew.% | 70,4 Gew.% | 72,5 Gew.% |
| Modellschmutz Restverschmutzung | | | | | | | |
| Abrasive Vorbehandlung | ohne | 3.0% | 12,8 % | 5.6% | 8.1% | 13,5 % | 12,3% |
| | mit | 1,2 % | 7,8 % | 2,5 % | 4.5% | 4,8 % | 8,8 % |

EP 1 240 221 B1

Tabelle 2

|  | | Vergleichsbeispiel 3 | Beispiel 5 | Beispiel 6 |
|---|---|---|---|---|
| Hydrophobes und/oder oleophobes Material | | PTFE | PP/PTFE 33/67 | Polypropylen |
|  | Anteil | 100 % | 2,9 Gew.% | 2,9 Gew.% |
|  | Korngröße | - | < 40 µm/ 12 µm | < 315 µm |
| Füllstoff | | - | ACQ | ACQ |
|  | Anteil | - | 62,9 Gew.% | 62,9 Gew.% |
| Model/schmutz Restverschmutzung | | | | |
| Abrasive Vorbehandlung | ohne | 42 % | 4,8 % | 4,7 % |
|  | mit | 32 % | 4,9 % | 5,6 % |

**Patentansprüche**

1. Aushärtbare Gießmasse zur Herstellung von Kunststofformkörpern mit einer flüssigen monomeren Acrylatkomponente, einem Antell eines partikelförmigen anorganischen Materials im Bereich von 45 bis 85 Gew.%, vorzugsweise 55 bis 75 Gew.% bezogen auf die Gießmasse, **dadurch gekennzeichnet, daß** die Gießmasse ferner einen Anteil eines pactikelförmigen hydrophoben und/oder oleophoben Kunststoffmaterial von 0,5 Gew.% oder mehr enthält, welches ausgewählt Ist aus Polytetrafluorethylen, Fluorelastomeren auf der Basis von Vinylldenfluorid-Hexafluorpropylen-Copolymerisaten, Polypropylen und Polypropylen-Copolymeren oder Mischungen dieser Materfallen.

2. Gießmasse nach Anspruch 1, **dadurch gekennzeichnet, daß** der Antell des hydrophoben und/oder oleophoben Materials bis zu 15 Gew.% beträgt.

3. Gießmasse nach Anspruch 2, **dadurch gekennzeichnet, daß** der Antelt des hydrophoben und/oder oleophoben Materials 1 bis 10 Gew.% beträgt.

4. Gießmasse nach Anspruch 3, **dadurch gekennzeichnet daß** der Anteil des hydrophoben und/oder oleophoben Materials 2 bis 7 Gew.%, vorzugsweise 2,5 bis 6 Gew. % beträgt.

5. Gießmasse nach einem der Ansprüche 1 bis 4, **dadurch gekennzeichnet, daß** das hydrophobe und/oder oleophobe Material eine Partikel- oder Partikelagglomeratgröße von < 500 µm aufweist, weiter bevorzugt im Mittel ≤ 50 µm.

6. Kunststofformkörper hergestellt unter Verwendung einer Gießmasse nach einem der Ansprüche 1 bis 5.

7. Kunststofformkörper nach Anspruch 6, **dadurch gekennzeichnet, daß** mindestens eine oberflächliche Sichtseitenschicht des Formkörpers von der Gleßmasse nach elnem der Ansprüche 1 bis 6 gebildet ist.

8. Kunststofformkörper nach Anspruch 7, **dadurch gekennzeichnete daß** die Sichtseitenschicht eine Dicke von 1 mm oder mehr aufweist.

9. Kunststofformkörper nach einem der Ansprüche 6 bis 8, **dadurch gekennzeichnet, daß** das hydrophobe und/oder oleophobe Material in den aus der Gleßmasse gebildeten Bereichen im wesentlichen homogen verteilt ist.

10. Kunststofformkörper nach einem der Ansprüche 6 bis 9, **dadurch gekennzeichnet, daß** der Formkörper eine Küchenspüle oder eine Küchenarbeitsplatte ist.

11. Verfahren zur Herstellung eines Kunststofformkörpers nach einem der Ansprüche 6 bis 10, wobei zunächst in einem die flüssige, monomere Acrylatkomponente enthaltenden Sirup der Anteil des hydrophoben und/oder oleophoben Material vordispergiert wird und dann der anorganische Füllstoff der Mischung aus Sirup und hydrophobem und/oder oleophobem Material zugemischt wird, wobei die so hergestelit Gießmasse in eine Form gegeben und schließlich dort gehärtet wird.

12. Verfahren nach Anspruch 11, **dadurch gekennzeichnet, daß** zunächst die Sichtseltenschicht des Kunststofformkörpers unter Verwendung einer Gießmasse nach einem der Ansprüche 1 bis 5 hergestellt und dann unter Verwendung einer weiteren Gießmasse der Rest des Formkörpers gebildet wird.

**Claims**

1. A curable moulding composition for the production of shaped plastics articles containing a liquid monomeric acrylate component and a particulate inorganic material, the latter in a concentration ranging from 45 to 85 wt%, preferably from 55 to 75 wt%, based on the moulding composition, **characterized in that** the moulding composition further contains a particulate hydrophobic and/or oleophobic plastics material in a concentration of 0.5 wt% or more, which is selected from the group comprising polytetrafluoroethylene, fluorocarbon elastomers based on vinylidene fluoride hexafluoropropylene copolymers, polypropylene, and polypropylene copolymers or mixtures of these substances.

2. The moulding composition as defined in claim 1, **characterized in that** the concentration of the hydrophobic and/or oleophobic material is up to 15 wt%.

3. The moulding composition as defined in claim 2, **characterized in that** the concentration of the hydrophobic and/or oleophobic material is from 1 to 10 wt%.

4. The moulding composition as defined in claim 3, **characterized in that** the concentration of the hydrophobic and/or oleophobic material is from 2 to 7 wt%, preferably from 2.5 to 6 wt%.

5. The moulding composition as defined in any one of claims 1 to 4, **characterized in that** the hydrophobic and/or oleophobic material exhibits a particle size or particle agglomerate size of <500 µm, preferably, on average, ≤50 µm.

6. A shaped plastics article produced from a moulding composition as defined in any one of claims 1 to 5.

7. The shaped plastics article as defined in claim 6, **characterized in that** at least one superficial face layer of the shaped article comprises the moulding composition as defined in any one of claims 1 to 6.

8. The shaped plastics article as defined in claim 7, **characterized in that** the face layer has a thickness of 1 mm or more.

9. The shaped plastics article as defined in any one of claims 6 to 8, **characterized in that** the hydrophobic and/or oleophobic material is distributed substantially homogeneously in the regions comprising the moulding composition.

10. The shaped plastics article as defined in any one of claims 6 to 9, **characterized in that** the shaped article is a kitchen sink unit or a kitchen worktop.

11. A process for the production of a shaped plastics article as defined in any one of claims 6 to 10, wherein first of all the portion comprising the hydrophobic and/or oleo phobic material is predispersed in a syrup containing the liquid, monomeric acrylate component, to which mixture of syrup and hydrophobic and/or oleophobic material the inorganic filler is then added, and the moulding composition thus produced is placed in a mould and subsequently cured therein.

12. The process as defined in claim 11, **characterized in that** first of all the face layer of the shaped plastics article is produced from a moulding composition as defined in any one of claims 1 to 5, and the rest of the shaped article is then formed from a further moulding composition.

**Revendications**

1. Masse à couler durcissable pour la production de corps moulés en matière plastique avec un composant acrylate monomère liquide, une fraction d'une matière inorganique particulaire dans le domaine de 45-85 % en masse, de préférence de 55 à 75 % en masse par rapport à la masse à couler, **caractérisée en ce que** la masse à couler contient en outre une fraction d'une matière plastique hydrophobe et/ou oléophobe particulaire de 0,5 % en masse ou plus, qui est choisie parmi le polytétrafluoroéthylène, les élastomères fluorés à base de copolymères fluorure de vinylidène-hexafluoropropylène, le polypropylène et les copolymères de polypropylène ou les mélanges de ces matières.

2. Masse à couler selon la revendication 1, **caractérisée en ce que** la fraction de matière hydrophobe et/ou oléophobe peut atteindre 15 % en masse.

3. Masse à couler selon la revendication 2, **caractérisée en ce que** la fraction de matière hydrophobe et/ou oléophobe est 1 à 10 % en masse.

4. Masse à couler selon la revendication 3, **caractérisée en ce que** la fraction de matière hydrophobe et/ou oléophobe est 2 à 7 % en masse, de préférence 2,5 à 6 % en masse.

5. Masse à couler selon l'une des revendications 1 à 4, **caractérisée en ce que** la matière hydrophobe et/ou oléophobe présente une taille de particules ou d'agglomérats de particules < 500 µm, de préférence encore en moyenne ≤ 50 µm.

6. Corps moulé en matière plastique fabriqué au moyen d'une masse à couler selon l'une des revendications 1 à 5.

7. Corps moulé en matière plastique selon la revendication 6, **caractérisé en ce qu'**au moins une couche latérale apparente superficielle du corps moulé est formée par la masse à couler selon l'une des revendications 1 à 6.

8. Corps moulé en matière plastique selon la revendication 7, **caractérisé en ce que** la couche latérale apparente présente une épaisseur de 1 mm ou plus.

9. Corps moulé en matière plastique selon l'une des revendications 6 à 8, **caractérisé en ce que** la matière hydrophobe et/ou oléophobe est répartie de manière sensiblement homogène dans les domaines formés par la masse à couler.

10. Corps moulé en matière plastique selon l'une des revendications 6 à 9, **caractérisé en ce que** le corps moulé est un évier de cuisine ou un plan de travail de cuisine.

11. Procédé de fabrication d'un corps moulé en matière plastique selon l'une des revendications 6 à 10, où tout d'abord la fraction de matière hydrophobe et/ou oléophobe est prédispersée dans un sirop contenant le composant acrylate monomère liquide puis la charge inorganique est combinée avec le mélange de sirop et de matière hydrophobe et/ou oléophobe, où la masse à couler ainsi produite est versée dans un moule et y est finalement durcie.

12. Procédé selon la revendication 11, **caractérisé en ce que** la couche latérale apparente du corps moulé en matière plastique est d'abord produite au moyen d'une masse à couler selon l'une des revendications 1 à 5 puis le reste du corps moulé est formé au moyen d'une autre masse à couler.

# FIG.1